(19) Europäisches Patentamt
European Patent Office
Office européen des brevets

(11) Publication number: **0 321 166 B1**

(12) # EUROPEAN PATENT SPECIFICATION

(45) Date of publication of patent specification: **31.03.93**

(51) Int. Cl.⁵: **C09J 111/02**, C08K 5/32

(21) Application number: **88311723.6**

(22) Date of filing: **12.12.88**

(54) **Adhesive composition,methods for the production and use thereof.**

(30) Priority: **18.12.87 US 134991**

(43) Date of publication of application:
**21.06.89 Bulletin 89/25**

(45) Publication of the grant of the patent:
**31.03.93 Bulletin 93/13**

(84) Designated Contracting States:
**DE FR GB IT SE**

(56) References cited:
**GB-A- 2 078 770**
**GB-A- 2 155 488**

(73) Proprietor: **LORD CORPORATION**
**2000 West Grandview Boulevard P.O. Box 10038**
**Erie Pennsylvania 16514-0038(US)**

(72) Inventor: **Auerbach, Robert A. 126 Anderson Drive**
**City of Erie County of Erie**
**Pennsylvania 16509(US)**
Inventor: **Berry, Doris B. 3535 Zuck Road**
**City of Erie County of Erie**
**Pennsylvania 16506(US)**

(74) Representative: **Dunlop, Brian Kenneth Charles et al**
**c/o Wynne-Jones, Lainé & James 22 Rodney Road**
**Cheltenham Gloucestershire GL50 1JJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.5x/3.0.1)

## Description

The present invention relates to adhesive compositions for bonding metal to rubber. More particularly, the present invention relates to water-based adhesives for bonding metals to vulcanizable rubbers; to methods for making such adhesives; to methods for bonding metals to vulcanizable rubbers using such adhesives; and to the bonded articles produced thereby.

Adhesives used in the bonding of natural and synthetic rubbers to substrates, including metal substrates, commonly employ a solvent base and are generally activated by the vulcanisation process. This is, at least in part, because volatile solvents such as toluene and xylene exhibit a high level of compatibility with the classes of compounds that provide the ingredients for such adhesives, and also tend to wet out the substrates effectively.

While solvent-based adhesives generally provide good adhesion, they also possess many undesirable qualities from the viewpoint of health, safety, and environmental quality. The solvents are usually toxic, presenting a health risk to those who come into contact with the solvents; with the adhesives containing the solvents; or with the fumes generated by either.

In addition, the volatility of both the solvents and their fumes presents the risk of fire or explosion during manufacture, packaging, shipping, and use of solvent-based adhesives.

Environmental concerns, especially as reflected in and enforced through state and federal laws and regulations, further detract from the desirability of using solvent-based adhesives.

These problems can be avoided through the use of water-based adhesives, such as those described in SADOWSKI, U.S. Patent 4,483,962. SADOWSKI discloses aqueous adhesive systems which employ a terpolymer latex formed by the emulsion polymerization of 2,3-dichloro-1,3-butadiene and a mixture of at least two different unsaturated monomers copolymerizable therewith.

British Patent No. 2155488A describes solvent-based Adhesive composition comprising at least one 2,3-dihalo-1,3-butadiene polymer, at least one aromatic nitroso compound, at least one lead salt of phosphorous acid or of dicarboxylic acids, and at least one maleimide compound.

Unfortunately, while water-based adhesives do not suffer from the health, safety, and environmental impact problems of solvent-based adhesives, they do exhibit performance drawbacks that have significantly limited their range of application. These drawbacks, and particularly lack of adequate holding power, are most evident under conditions of environmental stress, and especially under conditions of heat, moisture, or a combination of both.

Therefore, in high stress applications the benign qualities of water-based adhesives have been outweighed by the need for dependable performance, which has instead dictated the use of solvent-based adhesives notwithstanding their associated problems.

Dramatic improvements in resistance to environmental stress are demonstrated by an adhesive composition of matter which comprises a blend of:

a). a latex of a halogenated polymerized conjugated diene;

b). an aromatic poly-C-nitroso compound; and

c). a polymaleimide compound which is a polymer of a bismaleimide,

wherein the amount of said latex present in said adhesive composition is from 25 to 40% by weight; the amount of said poly-C-nitroso compound present in said adhesive composition is from 40 to 60% by weight; and the amount of said polymaleimide compound present in said adhesive composition is from 1 to 60% by weight, of total solids content.

The latex may be a polybutadiene, and may include at least one halogen selected from the group consisting of chlorine, bromine, and iodine. Most preferred are poly-2,3-dichlorobutadiene and poly-1,1,2-trichlorobutadiene.

The poly-C-nitroso compound may preferably be an aromatic dinitroso compound, and is most preferably dinitrosobenzene.

The polymaleimide preferably comprises at least two maleimide functional groups. Most preferably, the polymaleimide compound has the general formula:

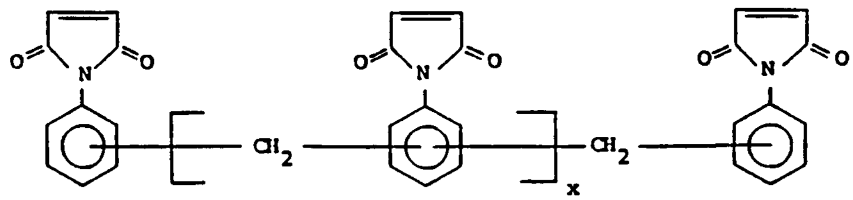

with x being a number from 0 to about 100.

The amount of polybutadiene latex present in the adhesive composition is preferably from 30 to 40% by weight; and most preferably, from 33 to 37% by weight. The aromatic nitroso compound is present in the adhesive composition in an amount of preferably from 45 to 59% by weight; and most preferably from 50 to 54% by weight.

Preferably the polymaleimide compound forms from 1 to 45% by weight of total solids, and most preferably from 1 to 30% by weight.

In addition to the above components, the adhesive composition of the present invention may include additives, such as fillers, extenders, colouring agents, carbon black, metallic oxides, surfactants, film-forming agents, and viscosity modifiers.

The adhesive composition of the present invention is generally prepared by forming a masterbatch of the aromatic nitroso compound, blending the polymaleimide compound into the masterbatch, and blending the latex into the masterbatch.

Sufficient water may be added to the blend to yield a total solids content of between 10 and 70 parts by weight.

It has now been discovered that, by incorporating a polymaleimide compound into water-based adhesives, dramatic and unexpected improvements in performance can be realised.

The water-based adhesives into which the polymaleimide compounds may be incorporated generally include a latex of a halogenated polymerized conjugated diene and a poly-C-nitroso compound. The latex may be polybutadiene, and may be a homopolymer, a copolymer, or a terpolymer as described in SADOWSKI, U.S. Patent 4,483,962.

The polymeric latex is preferably dihalogenated. While the halogen may be selected from the group consisting of chlorine, bromine, and iodine, chlorine is most preferred. In a particularly preferred embodiment, the latex is poly-2,3-dichlorobutadiene latex or poly-1,1,2-trichlorobutadiene latex.

The poly-C-nitroso compound may be based on any aromatic hydrocarbon, including benzene, naphthalene, anthracene, and biphenyl. The aromatic hydrocarbon may include from 1 to 3 aromatic nuclei, and contains from 2 to 6 nitroso groups attached to the ring or rings at non-adjacent positions. The aromatic nitroso compound is preferably a nitroso-benzene, and most preferably para-dinitrosobenzene.

It should be noted that the nuclear hydrogen atoms of the aromatic nucleus or nuclei may be substituted, such as with alkyl, alkoxy, cycloalkyl, aryl, arylkyl, alkyryl, aryl amine, aryl nitroso, or amino groups, or with halogen.

The polymaleimide to be incorporated into the adhesive system is of aliphatic or aromatic character and contains at least two maleimide groups. Preferred are such aromatic polymaleimides having from 1 to about 100 aromatic nuclei wherein the maleimide groups are directly attached to each adjacent aromatic ring. Particularly preferred polymaleimide compounds have the formula:

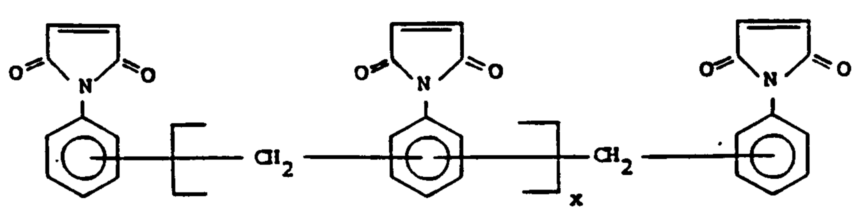

wherein x is from about 0 to 100. Such polymaleimides are common materials of commerce and are sold under different trade names by different companies, such as M-20 polymaleimide by Mitsui Toatsu.

The latex is typically prepared by emulsion polymerization of the desired monomer from 10 to 60% weight total solids content. More preferably the emulsion is prepared from 25 to 50% weight total solids

content, and most preferably the total solids content is from 40 to 45% weight.

The amount of latex present in the adhesive composition may be from 25 to 40% by weight of the total adhesive formulation. Preferably, the latex is present in amount of from 30 to 40% by total weight, with a range of from 33 to 37% by total weight being most preferred.

A mill base of aromatic nitroso compound prepared at about 40% total solids content should be present in the adhesive composition in an amount of from 40 to 60% by weight of the total adhesive formulation. Preferably, the aromatic nitroso compound should be present in an amount of from 45 to 59% by weight of the total adhesive formulation, and most preferably in an amount of from 50 to 54% by weight.

The polymaleimide component should form from 1 to 60% by weight of the total solids content. it is preferred to include the polymaleimide in an amount of from 1 to 45% by weight of the total solids content, and in a particularly preferred embodiment the polymaleimide is present in the amount of from 1 to 30% by weight of the total solids content.

Water is present in the adhesives in an amount sufficient to yield a final solids content of between 10 and 70 percent, preferably of between 20 and 60 percent, and most preferably of between 30 and 50 percent.

The adhesives of the present invention may optionally include additives, such as fillers, extenders, colouring agents, carbon black, metallic oxides, surfactants, film-forming agents, and viscosity modifiers.

Any suitable method may be employed to blend the components described above into the adhesives of the present invention. Generally, a masterbatch of the nitroso compound will first be prepared using, e.g., a ball mill. The polymaleimide may then be blended into the masterbatch, which is then blended with the latex. Water is added to the blend to produce the desired final solids content.

The resulting adhesive formulation is then applied to a primed metal surface to be bonded. Metals to which natural and synthetic rubber may be bonded according to the present invention include steel, other ferrous alloys, aluminium, etc. The metal surface may then be primed with adhesive primers such as CHEMLOK 205 solvent-based primer or CHEMLOK aqueous primer compositions, both available commercially from Lord Corporation.

After the primer coat has been allowed sufficient time to dry, the adhesive composition of the present invention may be applied by any suitable means, including dipping, spraying, and brushing. The adhesively prepared substrate is then permitted to dry, either at ambient conditions or under forced drying conditions, and bonding of the natural or synthetic rubber to the metal surface is carried out under the appropriate conditions of time, temperature, and pressure sufficient to effect bonding.

The present invention may be further appreciated by reference to the following Examples, which are in no way limiting.

Unless otherwise specified, all amounts are in parts by weight.

EXAMPLE 1 - FORMULATION OF ADHESIVES

| Ingredient | Batch | | | | | | |
|---|---|---|---|---|---|---|---|
| | A | B | C | D | E | F | G |
| Dichlorobutadiene latex | 87 | 87 | 87 | 87 | 87 | 87 | 87 |
| para-dinitrosobenzene millbase | 149 | 149 | 149 | 149 | 149 | 149 | 149 |
| M-20 Polymaleimide | 0 | 2.5 | 5 | 10 | 20 | 30 | 40 |
| Water sufficient to yield total solids content of: | 40 | 40 | 40 | 40 | 40 | 40 | 40 |

The para-dinitrosobenzene millbase of Example 1 is prepared from an admixture of the following components: 100 parts of dinitrosobenzene; 5 parts of surfactant Polywet Z1766 (commercially available from Uniroyal, Inc.); 5 parts of an acid scavenger such as a lead salt; 40 parts of carbon black Sterling NS (commercially available from Cabot Corporation); 0.07 parts of sodium hydroxide; 1 part of a dispersant aid such as Marasperse CB 05-3 (commercially available from American Can Company); and sufficient deionized water to bring the millbase to 45% total solids content.

EXAMPLE 2 - PRIMARY ADHESION TESTS

The adhesive formulations from Example 1 are used to bond solvent-wiped, grit blasted, or zinc phosphatized steel to sulfur vulcanizable natural rubber or synthetic elastomers. The metal parts are primed

with either solvent-based primer (CHEMLOK 205), or water-based primer.

Rubber assemblies were cured for appropriate times and at appropriate temperatures as determined by Rheometer, and then tested for peel adhesion by either ASTM D429B or ASTM D429C.

| Primary Adhesion | | | | | | | |
|---|---|---|---|---|---|---|---|
| Rubber | ASTM D-429-B Modified to 45° Peel Angle | | | | | | |
| | A | B | C | D | E | F | G |
| I | 44#<br>100TR | - | 45#<br>100R | 40#<br>100R | 45#<br>100R | 41#<br>100R | - |
| II | 45#<br>100TR | - | 50#<br>100TR | 49#<br>100TR | 44#<br>100TR | 50#<br>100TR | - |
| III | 46#SB<br>100R | - | 44#SB<br>100R | 48#SB<br>100R | 48#SB<br>100R | 47#SB<br>100R | - |
| IV | 166#<br>100R | - | 162#<br>100R | 166#<br>100R | 169#<br>100R | 176#<br>100R | - |
| V | 105#<br>100R | - | 110#<br>100R | 114#<br>100R | 110#<br>100R | 111#<br>100R | - |

Rubber Codes
I = Natural Rubber (high durometer)
II = Natural Rubber (intermediate durometer)
III = Natural Rubber (low durometer)
IV = Styrene-butadiene rubber
V = Neoprene
Adhesion Codes
R = percent rubber adhesion
TR = thin rubber retention
SR = step rubber (heavy)
SB = stock break
RC = rubber-to cement failure

As can be clearly seen, batches A, C, D, E, and F yield similar results in primary adhesion testing. Similar results were also obtained for these batches upon exposure to salt fog for 72 hours; all batches gave 100R.

EXAMPLE 3 - BOILING WATER RESISTANCE

In the following test, bonded assemblies were prepared by tying the rubber back with wire to expose and stress the bond line and were then submerged in boiling water for 2.0 hours.

All adhesive batches were tested with Natural Rubber I.

| A | B | C | D | E | F | G |
|---|---|---|---|---|---|---|
| 25R,RC | - | 25R,RC | 68R,RC | 100R | 100R | - |

EXAMPLE 4 - HOT TEAR RESISTANCE

In the following test, the adhesive strength of bonded conical assemblies was tested at a temperature of approximately 280°F, using ASTM D-429-C.

All adhesive batches were tested with a difficult-to-bond NR-SBR blend which typically exhibits poor hot tear strength.

| Hot Tear Resistance | | | | | | |
|---|---|---|---|---|---|---|
| A | B | C | D | E | F | G |
| 130#<br>33R,RC | 131#<br>30R,RC | 152#<br>30R,RC | 184#<br>70R,30TR | 175#<br>78R,22TR | 194#<br>83R,RC | 193#<br>83R,RC |

The above Examples conclusively demonstrate that dramatic improvements in boiling water resistance and in hot tear resistance may be achieved by adding polymaleimide to a water-based, butadiene latex/nitroso adhesive system. Particularly effective are formulations D and E, where total rubber retention is 100%

COMPARATIVE EXAMPLE 1 - FORMULATION OF ADHESIVES

| | Batch | | | | | | |
|---|---|---|---|---|---|---|---|
| Ingredient | H | I | J | K | L | M | N |
| Dichlorobutadiene latex | 87 | 87 | 87 | 87 | 87 | 87 | 87 |
| p-Dinitrosobenzene millbase | 149 | 149 | 149 | 149 | 119 | 119 | 149 |
| M-20 Polymaleimide | - | - | - | - | 10 | - | - |
| m-Phenylene-bismaleimide | 2.5 | [5 | 10 | 15] | - | - | - |
| | | [unstable, resulted in phase separation] | | | | | |
| BMI-S Bismaleimide (p,p'-diphenylmethane-bismaleimide) | - | - | - | - | - | 10 | - |
| Water sufficient to yield total solids content of: | 40 | 40 | 40 | 40 | 40 | 40 | 40 |

COMPARATIVE EXAMPLE 2 - BOILING WATER RESISTANCE

Test conditions are identical to those described in Example 3.

| H | I | J | K | L | M | N |
|---|---|---|---|---|---|---|
| - | 17R | 20R | 0R | 100R | 13R | 25R |

EXAMPLE 5 - EFFECT OF POLYMALEIMIDE LEVEL

The following Table demonstrates the effects of increasing amounts of polymaleimide on primary adhesion, boiling water resistance, and salt fog resistance for a number of elastomers bonded to steel. The effect of maleimide level is most significant in terms of boiling maleimide level is most significant in terms of boiling water resistance with high durometer natural rubber. Primary adhesion and salt fog tests are not discriminating, as demonstrated by the fact that performance of the control formulation containing no polymaleimide is satisfactory in those tests.

Screening Study : Effect of M20 in EP4987-1

| Elastomer | Test ASTM D429-B, C | Parts M-20 on 100 Parts Adhesive Solids: 0 | 5 | 10 | 20 | 30 |
|---|---|---|---|---|---|---|
| Natural Rubber Durometer 62 | Primary Adhesion | | | | | |
| | 0' prebake | 76# 66SR,34TR | 90# 83R,17TR | 83# 100SR | 90# 100SR | 68# 66SR,34TR |
| | 5' prebake | 44# 100TR | 46# 100TR | 45# 100TR | 47# 100TR | 29# 100TR |
| | Boiling Water (2 hr.) | 25R,RC | 25R,RC | 68R,RC | 100R | 100R |
| | Salt fog (72 hr.) | 100R | 100R | 100R | 100R | 100R |
| Natural Rubber Durometer 47 | Primary Adhesion | | | | | |
| | 0' prebake | 45# 100TR | 41# 100TR | 40# 100TR | 46# 100TR | 50# 100TR |
| | 5' prebake | 45# 100TR | 47# 100TR | 53# 100TR | 49# 100TR | 46# 100TR |
| | Boiling Water (2 hr.) | 100R | 100R | 100R | 100R | 100R |
| Natural Rubber Durometer 42 | Primary Adhesion | 46# 100R,SB | 44# 100R,SB | 48# 100R,SB | 47# 100R,SB | 47# 100R,SB |
| Styrene-Butadiene Rubber | Primary Adhesion | 166# 100R,SB | 162# 100R,SB | 166# 100R,SB | 169# 100R,SB | 176# 100R,SB |
| Neoprene | Primary Adhesion | 105# 100R | 110# 100R | 114# 100R | 110# 100R | 111# 100R |

Code:
R = Percent rubber retention
TR = thin rubber retention
SR = step rubber (heavy)
SB = stock break
RC = rubber-to-cement failure

Naturally, while the present invention has been described by reference to certain specific means, methods, and materials its scope is not to be considered limited thereby, but extends to any and all equivalent means, methods, and materials by which the present invention may be practiced.

## Claims

1. An adhesive composition of matter comprising a blend of:
   a) a latex of a halogenated polymerized conjugated diene;
   b) an aromatic poly-C-nitroso compound; and
   c) a polymaleimide compound which is a polymer of a bismaleimide,

   wherein the amount of said latex present in said adhesive composition is from 25 to 40% by weight; the amount of said poly-C-nitroso compound present in said adhesive composition is from 40 to 60% by weight; and the amount of said polymaleimide compound present in said adhesive composition is from 1 to 60% by weight, of total solids content.

2. The adhesive composition as defined by Claim 1, wherein said polymerized conjugated diene is polybutadiene, and wherein said polybutadiene comprises at least one halogen selected from the group consisting of chlorine, bromine and iodine.

3. The adhesive composition as defined by Claim 2, wherein said polybutadiene is selected from the group consisting of poly-2,3-dichlorobutadiene and poly-1,1,2-trichlorobutadiene.

4. The adhesive composition as defined by any one of Claims 1 to 3, wherein said poly-C-nitroso compound is an aromatic dinitroso compound.

5. The adhesive composition as defined by Claim 4, wherein said aromatic dinitroso compound is dinitrosobenzene or para-dinitrosobenzene.

6. The adhesive composition as defined by any one of the preceding Claims, wherein said polymaleimide compound comprises at least two maleimide functional groups.

7. The adhesive composition as defined by Claim 5, wherein said polymaleimide compound has the general formula:

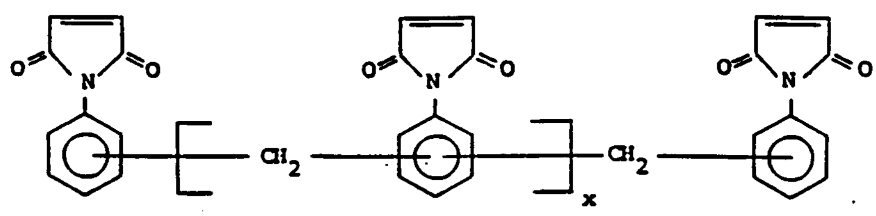

   wherein x is a number from 1 to about 100.

8. The adhesive composition as defined by any one of the preceding claims, wherein the amount of said latex present in said adhesive composition is from 30 to 40% by weight; the amount of said poly-C-nitroso compound present in said adhesive composition is from 45 to 59% by weight; and the amount of said poly-maleimide present in said adhesive composition is from 1 to 45% by weight, of total solids content.

9. The adhesive composition as defined by Claim 8, wherein the amount of said latex present in said adhesive composition is from 33 to 37% by weight; the amount of said poly-C-nitroso compound present in said adhesive composition is from 50 to 54% by weight; and the amount of said polymaleimide present in said adhesive composition is from 1 to 30% by weight, of total solids content.

10. The adhesive composition as defined by any one of the preceding claims, further comprising additives selected from the group consisting of fillers, extenders, colouring agents, carbon black, metallic oxides, surfactants, film-forming agents, and viscosity modifiers.

**11.** A method of making the adhesive composition of matter as defined by any one of Claims 1 to 10, comprising forming a masterbatch of said poly-C-nitroso compound; blending said polymaleimide compound into said masterbatch; and blending said latex into said masterbatch.

**12.** A method as defined by Claim 11, further comprising adding to said masterbatch sufficient water to yield a total solids content of between 10 and 70 parts by weight.

**Patentansprüche**

**1.** Klebmischung für Materialien, umfassend eine Mischung von:
a) einem Latex eines halogenierten, polymerisierten, konjugierten Diens;
b) einer aromatischen Poly-C-nitrosoverbindung; und
c) einer Polymaleinimidverbindung, welche ein Polymeres eines Bismaleinimids ist,
worin die Menge dieses in dieser Klebmischung vorhandenen Latex von 25 bis 40 Gew.-% beträgt; die Menge dieser in dieser Klebmischung vorhandenen Poly-C-nitrosoverbindung von 40 bis 60 Gew.-% beträgt; und die Menge dieser in dieser Klebmischung vorhandenen Polymaleinimidverbindung von 1 bis 60 Gew.-% beträgt, bezogen auf Gesamtfeststoffgehalt.

**2.** Klebmischung nach Anspruch 1, worin dieses polymerisierte, konjugierte Dien Polybutadien ist, und worin dieses Polybutadien wenigstens ein Halogen, ausgewählt aus der aus Chlor, Brom und Jod bestehenden Gruppe, umfaßt.

**3.** Klebmischung nach Anspruch 2, worin dieses Polybutadien aus der aus Poly-2,3-dichlorbutadien und Poly-1,1,2-trichlorbutadien bestehenden Gruppe ausgewählt ist.

**4.** Klebmischung nach einem der Ansprüche 1 bis 3, worin diese Poly-C-nitrosoverbindung eine aromatische Dinitrosoverbindung ist.

**5.** Klebmischung nach Anspruch 4, worin diese aromatische Dinitrosoverbindung Dinitrosobenzol oder para-Dinitrosobenzol ist.

**6.** Klebmischung nach einem der vorhergehenden Ansprüche, worin diese Polymaleinimidverbindung wenigstens zwei funktionelle Maleinimidgruppen umfaßt.

**7.** Klebmischung nach Anspruch 5, worin diese Polymaleinimidverbindung die allgemeine Formel besitzt:

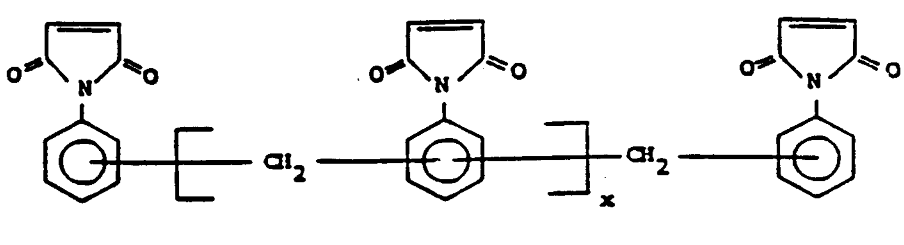

worin x eine Zahl von 1 bis etwa 100 ist.

**8.** Klebmischung nach einem der vorhergehenden Ansprüche, worin die Menge dieses in dieser Klebmischung vorhandenen Latex von 30 bis 40 Gew.-% beträgt; die Menge dieser in dieser Klebmischung vorhandenen Poly-C-nitrosoverbindung von 45 bis 59 Gew.-% beträgt; und die Menge dieses in dieser Klebmischung vohandenen Polymaleinimids von 1 bis 45 Gew.-% beträgt, bezogen auf Gesamtfeststoffgehalt.

**9.** Klebmischung nach Anspruch 8, worin die Menge dieses in dieser Klebmischung vorhandenen Latex von 33 bis 37 Gew.-% beträgt; die Menge dieser in dieser Klebmischung vorhandenen Poly-C-nitrosoverbindung von 50 bis 54 Gew.-% beträgt; und die Menge dieses in dieser Klebmischung vorhandenen Polymaleinimids von 1 bis 30 Gew.-% beträgt, bezogen auf Gesamtfeststoffgehalt.

**10.** Klebmischung nach einem der vorhergehenden Ansprüche, weiter umfassend aus der aus Füllstoffen, Streckmitteln, Färbemitteln, Ruß, Metalloxiden, Tensiden, Filmbildnern und Viskositätsreglern bestehenden Gruppe ausgewählte Zusatzstoffe.

**11.** Verfahren zur Herstellung der Klebmischung für Materialien nach einem der Ansprüche 1 bis 10, umfassend die Bildung eines Ansatzes aus dieser Poly-C-nitrosoverbindung; Einmischen dieser Polymaleinimidverbindung in diesen Ansatz; und Einmischen dieses Latex in diesen Ansatz.

**12.** Verfahren nach Anspruch 11, weiter umfassend die Zugabe von ausreichend Wasser zu diesem Ansatz, um einen Gesamtfeststoffgehalt zwischen 10 und 70 Gewichtsteilen zu erhalten.

**Revendications**

**1.** Composition de matière adhésive, comprenant un mélange de :
(a) un latex d'un diène conjugué polymérisé halogéné ;
(b) un composé poly-C-nitroso aromatique ; et
(c) un composé polymaléimide qui est un polymère d'un bismaléimide,
dans laquelle la quantité dudit latex présent dans ladite composition adhésive est de 25 à 40% en poids ; la quantité dudit composé poly-C-nitroso présent dans ladite composition adhésive est de 40 à 60% en poids ; et la quantité dudit composé polymaléimide présent dans ladite composition adhésive est de 1 à 60% en poids, sur la base de la teneur totale en matières solides.

**2.** Composition adhésive selon la revendication 1, dans laquelle ledit diène conjugué polymérisé est le polybutadiène, et dans laquelle ledit polybutadiène comprend au moins un halogène choisi dans le groupe constitué par le chlore, le brome et l'iode.

**3.** Composition adhésive selon la revendication 2, dans laquelle ledit polybutadiène est choisi dans le groupe constitué par le poly-dichloro-2,3 butadiène et le polytrichloro-1,1,2 butadiène.

**4.** Composition adhésive selon l'une quelconque des revendications 1 à 3, dans laquelle ledit composé poly-C-nitroso est un composé dinitroso aromatique.

**5.** Composition adhésive selon la revendication 4, dans laquelle ledit composé dinitroso aromatique est le dinitrosobenzène ou le para-dinitrosobenzène.

**6.** Composition adhésive selon l'une quelconque des revendications précédentes, dans laquelle ledit composé polymaléimide comprend au moins deux groupes fonctionnels maléimide.

**7.** Composition adhésive selon la revendication 5, dans laquelle ledit composé polymaléimide est représenté par la formule générale :

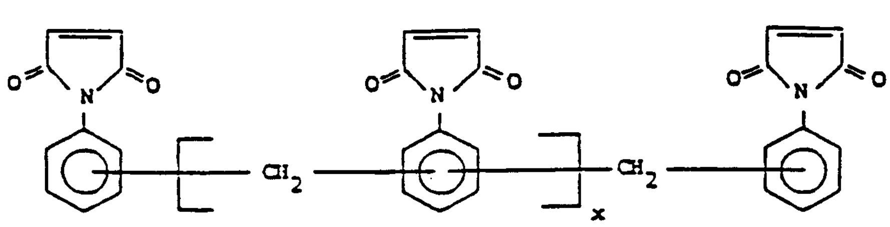

dans laquelle x est nombre de 1 à environ 100.

**8.** Composition adhésive selon l'une quelconque des revendications précédentes, dans laquelle la quantité dudit latex présent dans ladite composition adhésive est de 30 à 40% en poids ; la quantité dudit composé poly-C-nitroso présent dans ladite composition adhésive est de 45 à 59% en poids ; et la quantité dudit composé polymaléimide présent dans ladite composition adhésive est de 1 à 45% en poids, sur la base de la teneur totale en matières solides.

**9.** Composition adhésive selon la revendication 8, dans laquelle la quantité dudit latex présent dans ladite composition adhésive est de 33 à 37% en poids ; la quantité dudit composé poly-C-nitroso présent dans ladite composition adhésive est de 50 à 54% en poids ; et la quantité dudit composé polymaléimide présent dans ladite composition adhésive est de 1 à 30% en poids, sur la base de la teneur totale en matières solides.

**10.** Composition adhésive selon l'une quelconque des revendications précédentes, comprenant en outre des additifs choisis dans le groupe constitué par les charges, les agents d'allongement, les agents de coloration, le noir de carbone, les oxydes métalliques, les agents tensio-actifs, les agents filmogènes, et les agents modifiant la viscosité.

**11.** Procédé de fabrication de la composition de matière adhésive telle que définie à l'une quelconque des revendications 1 à 10, comprenant :
- la formation d'un mélange-maître dudit composé poly-C-nitroso ;
- l'incorporation par mélange dudit composé polymaléimide dans ledit mélange-maître ; et
- l'incorporation par mélange dudit latex dans ledit mélange-maître.

**12.** Procédé selon la revendication 11, comprenant en outre l'addition audit mélange-maître de suffisamment d'eau, pour conduire à une teneur totale en matières solides se situant entre 10 et 70 parties en poids.